# EUROPEAN PATENT APPLICATION

(11) **EP 1 265 334 A2**
(43) Date of publication of application: **11.12.2002**
(21) Application number: 02012563.9
(22) Date of filing: 05.06.2002
(51) Int. Cl.: H02J 7/00

(54) **Charger for portable terminal**

(30) Priority: 08.06.2001 KR 2001032064
(71) Applicant: LG ELECTRONICS INC., Seoul (KR)
(72) Inventor: Son, Young-Chul, Geumcheon-Ku, Seoul (KR)
(74) Representative: Urner, Peter, Dipl.-Phys.

(57) **Abstract**

A charger (200) for a portable terminal which is capable of making a portable terminal (100) perform a data communication with an information processing system while charging by forming a groove (211) to allow a communication cable (410) of an information processing system to attach to a receptacle (110) of a portable terminal. The charger includes a fixation unit for mounting a portable terminal to the charger and includes a connector insertion groove (216) in the charger which allows connection between a communication cable of an information processing system and a portable terminal.

## Description

### BACKGROUND OF THE INVENTION

### 1. Field of the Invention

The present invention relates to a charger for a portable terminal.

### 2. Background of the Related Art

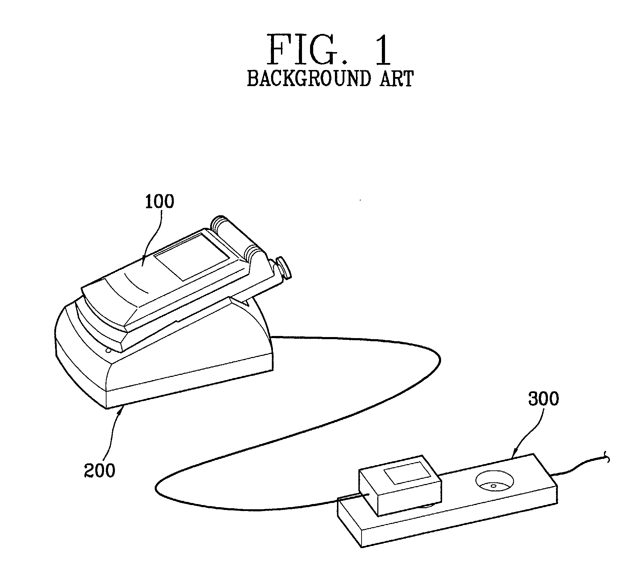

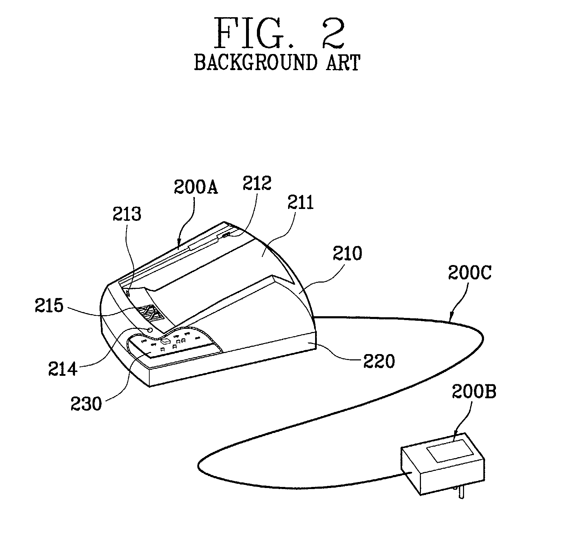

Figure 1 illustrates a portable terminal 100, a charger 200 for charging the portable terminal 100 and a plug-socket 300 for supplying power in the related art. As depicted in Figure 2, the charger 200 is constructed with a terminal fixed board 200A for fixing the portable terminal 100 during charging, an adapter 200B for applying DC power to the terminal fixed board 200A, and a wire 200C for connecting the terminal fixed board 200A to the adapter 200B.

In addition, the terminal fixed board 200A is constructed with an upper casing 210 formed with a certain internal space, a lower casing 220 for supporting the upper casing 210, a PCB (printed circuit board) 230 installed within the internal space of the terminal fixed board 200A. In the terminal fixed board 200A, a mounting groove 211 is formed on the upper portion of the upper casing 210 in order to mount the portable terminal 100 and a locking pin 212 projected from both internal sides of the mounting groove 211 of the portable terminal 100. The upper casing also has a fixed protrusion 213 projecting from both sides on the lower end of the terminal fixed board 200A so as to match with a fixation groove formed on the both sides of the portable terminal 100, a lamp 214 for indicating a charge state of the portable terminal 100, and a charge terminal 215 contacting a connector on the portable terminal 100.

In order to charge a portable terminal 100 in the related art, the portable terminal 100 is connected through an adapter 200B of the charger 200 to a plug socket 300 supplying power. Charging begins when the lower end of the portable terminal 100 is placed into the upper end (entrance) of the mounting groove 211 in the portable terminal 100. When the portable terminal 100 is inserted into the mounting groove 211, a fixed protrusion 213 formed at the terminal fixed board 200A is inserted into a fixed groove formed at the lower end of the portable terminal 100. Next, after the fixed protrusion 213 is inserted into the portable terminal 100, a locking pin 212 of the terminal fixed board 200A is inserted into a locking groove formed at the sides of the portable terminal 100. Accordingly, the portable terminal 100 is mounted in the charger 200, where the charger 200 is connected via a wire 200C to the adaptor 200B. Additionally, the lamp 214 of the charger 200 often emits a red light indicating the charging of the portable terminal 100.

After a certain time has passed in that state, the lamp 214 often emits a green light indicating the end of the charging. At this point, the user separates the portable terminal 100 from the charger 200 by reversing the above-described mounting processes.

However, because there is no unit for connecting the portable terminal 100 to both a charger and a computer, the portable terminal 100 can not be charged while connected to a computer. As such, a data communication with the computer while the portable terminal 100 is charging can not be accomplished.

The above references are incorporated by reference herein where appropriate for appropriate teachings of additional or alternative details, features and/or technical background.

### SUMMARY OF THE INVENTION

An object of the invention is to solve at least the above problems and/or disadvantages and to provide at least the advantages described hereinafter.

In order to solve the above-mentioned problem, it is an object of the present invention to provide a charger for a portable terminal which is capable of making a portable terminal perform a data communication with a computer during charge by connecting a communication cable to the computer and the portable terminal through the charger.

In order to achieve at least the above objects in whole or in part, and in accordance with the purpose of the present invention, as embodied and broadly described, there is provided a charger for a portable terminal, including a fixation unit for mounting a portable terminal and a connector insertion groove which allows connection of a communication cable to a portable terminal.

To further achieve at least the above objects in whole or in part, and in accordance with the purpose of the present invention, as embodied and broadly described, there is provided a charger of a portable terminal, including an upper casing connectable to a portable terminal, a communication cable of an information processing system connectable to a portable terminal and an information processing system, a lower casing supporting the upper casing, and a printed circuit board (PCB) including soldered electrical parts for charging a portable terminal.

To further achieve at least the above objects in whole or in part, and in accordance with the purpose of the present invention, as embodied and broadly described, there is provided a charger and data communicator for a portable terminal, including a mounting unit capable of connection to a power source and a groove in the mounting unit capable of allowing a connector portion of a cable to be attached thereto, wherein a connector portion of a cable is attached to a portable terminal through the groove when a portable terminal is supported by the mounting unit.

To further achieve at least the above objects in whole or in part, and in accordance with the purpose of the present invention, as embodied and broadly described, there is provided a method of charging and utilizing a mobile telephone with an information processing system, including mounting a mobile telephone to a charging unit, directly connecting the mobile telephone to a data communication device while the mobile telephone is mounted to the charging unit, connecting an information processing system to a data communication device, and transferring data to a mobile telephone from an information processing system, wherein the transferring of the data and a charging of a mobile telephone occur concurrently while a mobile telephone is mounted to the charging unit.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 illustrates a related art portable terminal mounted onto a charger;
Figure 2 illustrates a related art general charger for a portable terminal;
Figure 3 illustrates a charger for a portable terminal in accordance with a preferred embodiment of the present invention;
Figure 4 is an enlarged view illustrating the charger for the portable terminal in accordance with a preferred embodiment of the present invention;
Figure 5 is a sectional view illustrating the charger for the portable terminal taken along the line A-A' of Figure 3; and
Figure 6 illustrates a portable terminal mounted onto the charger and connected to a connector of a computer in charging.

### DETAILED DESCRIPTION OF PREFERRED EMBODIMENTS

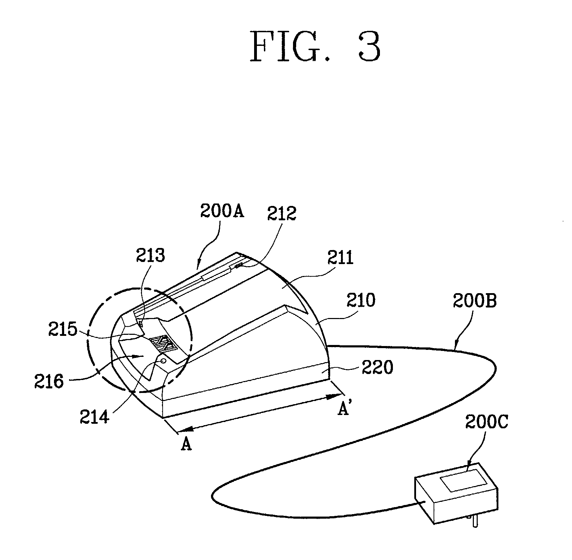

Figure 3 illustrates a charger for a portable terminal in accordance with a preferred embodiment of the present invention. As depicted in Figure 3, in order to connect a computer or other data device and a charger to a portable terminal, such as a mobile wireless telephone, a communication cable or any other connecting device must be connected between the data device and the portable terminal while the portable terminal is also connected to the charger 200.

The charger 200 for a portable terminal in accordance with a preferred embodiment of the present invention includes a connector insertion groove 216 formed in the terminal fixed board 200A to allow for space for the connector. The connector insertion groove 216 can be formed at a lower portion of the upper casing 210 of the terminal fixed board 200A or any appropriate position that aligns with the portable terminal's communication receptacle 110. A connector 420 of a communication cable or other communicating device can be connected to both the computer 400 and the portable terminal 100. For example, when the portable terminal is fixed/mounted onto the mounting groove 211 through the connector insertion groove 216, the cable can be connected. As such, the connector insertion groove 216 can be placed at a reciprocal position to the position of a receiving receptacle 110 for the connector of the portable terminal 100.

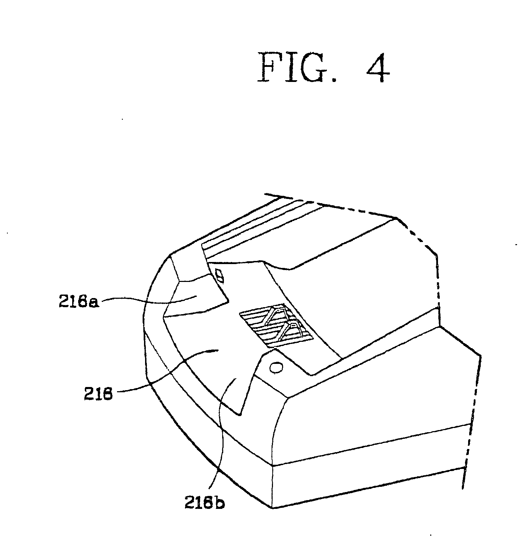

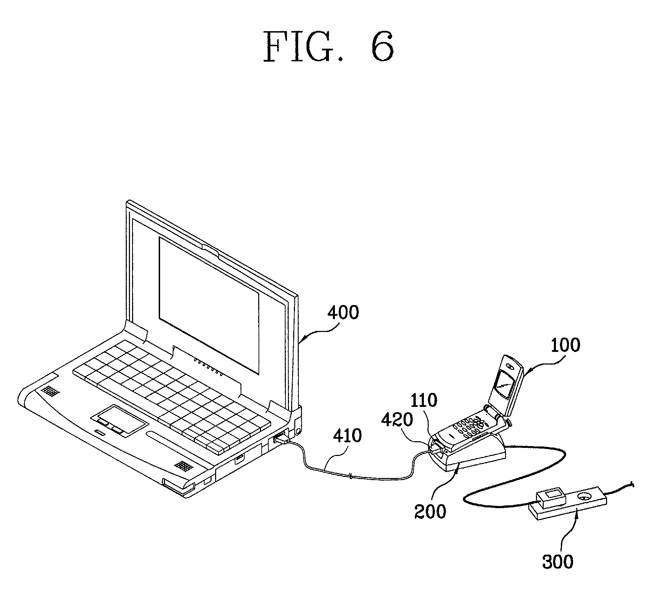

Figure 4 is an enlarged view illustrating the charger 200 for the portable terminal 100 in accordance with a preferred embodiment of the present invention. The connector insertion groove 216 can be constructed with two walls 216a and a bottom surface 216b between the walls 216a. The walls 216a can be spaced apart from each other by a distance which allows for inserting the connector 420 into the receptacle 110 of the portable terminal 100, as also illustrated in Figure 6. The bottom surface 216b can be formed to slant so as to allow easier insertion of the connector 420 into the receptacle 110 of the portable terminal 100 if the portable terminal 100 is slanted-mounted onto the terminal fixed board 200A. Additionally, the walls 216a can be spaced apart at a top section to provide a receptacle 110 region which is about the same width as the connector 420 for a tight fit of the connector 420. The walls can also have a bottom section wider than the top section to allow for easier insertion of the connector 420 into the receptacle 110.

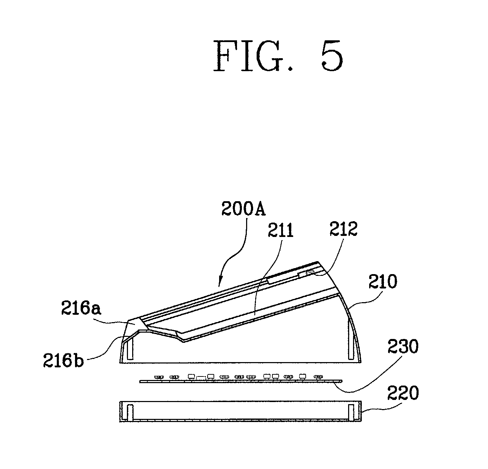

Figure 5 is a sectional view illustrating the charger 200 for the portable terminal 100 taken along the line A-A' of Figure 3. As depicted in Figure 5, the terminal fixed board 200A of the charger 200 is constructed with the upper casing 210, the lower casing 220, the PCB 230, the mounting groove 211, the locking pin 212, the walls 216a and the bottom surface 216b of the connector insertion groove 216.

Figure 6 illustrates the portable terminal 100 mounted onto the charger 200 and connected to a connector of a computer while being charged. Figure 6 illustrates a computer 400 with a communication cable 410 for connecting the computer 400 to the portable terminal 100 and a connector 420 for connecting to the portable terminal 100 through a receptacle 110 of the portable terminal 100 connected to the connector 420. Further, Figure 6 includes the portable terminal 100, the charger 200 for charging the portable terminal 100, and a plug socket 300. It is noted that the charger 200 illustrates the connector insertion groove large enough to accommodate the connection of the connector 420 to the receptacle 110, but the shape of the groove is better illustrated in Figures 3 and 4.

In order to charge the portable terminal 100, the user of the portable terminal 100 can contact the adapter 200C of the charger 200 to the plug socket 300 by slide-mounting the portable terminal 100 onto the mounting groove 211 formed at the upper surface of the terminal fixed board 200A of the charger 200. After that, in order to connect the portable terminal 100 to the computer 400, the user can insert the connector 420 of the communication cable 410, which is connected to the computer 400, into the receptacle 110 of the portable terminal 100 through the connector insertion groove 216 formed at the terminal fixed board 200A. When the connector 420 connected to the computer 400 is inserted into the receptacle 110 of the portable terminal 100, data transfer capability starts, and the user can start a data communication using the computer 400 while charging occurs with the connector 420 and charger 200 securely in place. As such, the portable terminal 100 can perform a data communication while being charged with a low likelihood for disturbance of either the data communication or the charging.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A charger for a portable terminal, comprising:
a fixation unit for mounting a portable terminal; and
a connector insertion groove which allows connection of a communication cable to a portable terminal.

2. The charger of claim 1, wherein the connector insertion groove includes:
two walls having a spacing between the two walls which allows a communication cable to be inserted into a receptacle of a portable terminal, wherein the spacing between the two walls is approximately the same width as a connector portion of a communication cable; and
a bottom surface slanted to allow a communication cable to slide up the slant into a receptacle of a portable terminal.

3. The charger of claim 2, wherein the connector insertion groove is formed at a position on the charger at a reciprocal position to the position at which a receptacle of a portable terminal is placed.

4. The charger of claim 2, wherein the two walls of the connector insertion groove form a space capable of allowing a connector portion of a communication cable to be precisely inserted into a receptacle of a portable terminal.

5. The charger of claim 2, wherein the bottom surface of the connector insertion groove has the same slope angle as a mount angle of a portable terminal when a portable terminal is mounted onto a fixed board of the charger.

6. The charger of claim 2, wherein the bottom surface of the connector insertion groove is angled and the two walls of the connector insertion groove are spaced to provide a close fit for connecting a portable terminal and a connector portion of a communication cable, which prevents a connector portion of a communication cable connected to a receptacle of a portable terminal from separating due to external movement or fluctuation.

7. The charger of claim 6, wherein a receptacle of a portable terminal can be placed at any position on a portable terminal.

8. The charger of claim 7, wherein the connector insertion groove is formed at a position on the charger reciprocal to the position at which a receptacle of a portable terminal is placed.

9. The charger of claim 1, wherein the connector insertion groove comprises two walls, wherein each wall is spaced apart from each other at a top section by a predetermined width approximately equivalent to a width of a connector portion of a communication cable and wherein each wall is spaced farther apart from each other at a bottom section than the top section.

10. A charger of a portable terminal, comprising:
an upper casing connectable to a portable terminal;
a communication cable of an information processing system connectable to a portable terminal and an information processing system;
a lower casing supporting the upper casing; and
a printed circuit board (PCB) including soldered electrical parts for charging a portable terminal.

11. The charger of claim 10, wherein the upper casing further includes:
a connector insertion groove for connecting a connector portion of a communication cable to an information processing system and a receptacle of a portable terminal.

12. The charger of claim 11, wherein the connector insertion groove includes:
two walls having a spacing between the two walls which allows a connector portion of a communication cable of an information processing system to be inserted into the connector insertion groove and connected to a receptacle of a portable terminal, wherein the spacing between the two walls is approximately the same width as a connection portion of a communication cable; and
a bottom surface slanted to allow a communication cable to slide up the slant into a receptacle of a portable terminal.

13. The charger of claim 12, wherein the two walls of the connector insertion groove form a space capable of allowing a connector portion of a communication cable to be precisely inserted into a receptacle of a portable terminal.

14. The charger of claim 12, wherein the bottom surface of the connector insertion groove has the same slope angle as a mount angle of a portable terminal when a portable terminal is mounted onto a fixed board of the charger.

15. The charger of claim 12, wherein the bottom surface of the connector insertion groove is angled and the two walls of the connector insertion groove are spaced to provide a close fit for connecting a portable terminal and a connector portion of a cable, which prevents a connector portion of a communication cable connected to a receptacle of a portable terminal from separating due to external movement or fluctuation.

16. The charger of claim 15, wherein a receptacle of a portable terminal can be placed at any position on a portable terminal.

17. The charger of claim 12, wherein the connector insertion groove is formed at a position on the charger reciprocal to the position of a receptacle of a portable terminal.

18. The charger of claim 11, wherein the communication insertion groove comprises two walls, wherein each wall is spaced apart from each other at a top section by a predetermined width approximately equivalent to a width of a connector portion of a communication cable and wherein each wall is spaced farther apart from each other at a bottom section than the top section.

19. A charger and data communicator for a portable terminal, comprising:
a mounting unit capable of connection to a power source; and
a groove in the mounting unit capable of allowing a connector portion of a cable to be attached thereto, wherein a connector portion of a cable is attached to a portable terminal through the groove when a portable terminal is supported by the mounting unit.

20. The charger and data communicator of claim 19, wherein the groove includes:
two walls having a spacing between the two walls which allows a connector portion of a cable to be inserted into a receptacle of a portable terminal, wherein the spacing between the two walls is approximately the same width as a connector portion of a cable; and
a bottom surface slanted to about the same slope angle as a mount angle of a portable terminal when a portable terminal is mounted onto a fixed board of the charger to allow a cable to slide up the slant into a receptacle of a portable terminal, wherein the groove is formed at a position on the charger reciprocal to the position at which a receptacle of a portable terminal is placed, wherein the two walls of the groove form a space capable of allowing a connector portion of a cable to be inserted into a receptacle of a portable terminal, wherein the bottom surface and the two walls of the groove are configured to provide a close fit for connecting a portable terminal and a connector portion of a cable, which prevents a connector portion of a cable connected to a receptacle of a portable terminal from separating due to external movement or fluctuation, and wherein a receptacle of a portable terminal can be placed at any position on a portable terminal.

21. The charger and data communicator of claim 19, further comprising a locking pin in the mounting unit capable of locking a portable terminal to the mounting unit, wherein the groove comprises a hole on a bottom portion of the mounting unit that a connector portion of a cable can be passed through or can be fit inside.

22. The charger of claim 17, wherein a portable terminal is a mobile telephone.

23. A method of charging and utilizing a mobile telephone with an information processing system, comprising:
mounting a mobile telephone to a charging unit;
directly connecting the mobile telephone to a data communication device while the mobile telephone is mounted to the charging unit;
connecting an information processing system to a data communication device; and
transferring data to a mobile telephone from an information processing system, wherein the transferring of the data and a charging of a mobile telephone occur concurrently while a mobile telephone is mounted to the charging unit.

24. The method of claim 23, wherein the connecting a mobile telephone to a data communication device comprises:
inserting a connecting device through a depressed portion in the charging unit, wherein the depressed portion in the charging unit has a width approximately the same as the width of a connection portion of a data communicating device; and
connecting a connection portion of a data communicating device to an information processing system and a mobile telephone while not disturbing the charging of a mobile telephone.
